# EUROPÄISCHE PATENTSCHRIFT

(11) **EP 3 063 505 B1**
(45) Veröffentlichungstag und Bekanntmachung des Hinweises auf die Patenterteilung: **11.05.2022**
(21) Anmeldenummer: 15738603.8
(22) Anmeldetag: 01.07.2015
(51) Int. Cl.: G01D 21/00, H02P 6/16, H02K 29/06

(54) **POSITIONSSENSOR FÜR DIE ERFASSUNG EINER LAGEPOSITION EINES AKTUATORS**
POSITION SENSOR FOR DETECTING A POSITION OF AN ACTUATOR
CAPTEUR DE POSITION PERMETTANT DE DÉTECTER UNE POSITION D'UN ACTIONNEUR

(30) Priorität: 02.07.2014 DE 102014212795
(43) Veröffentlichungstag der Anmeldung: 07.09.2016
(73) Patentinhaber: Vitesco Technologies GmbH, 93055 Regensburg (DE)
(72) Erfinder: WALLRAFEN, Werner, 65795 Hattersheim (DE)
(74) Vertreter: Vitesco Technologies
(86) Internationale Anmeldenummer: PCT/EP2015/064960
(87) Internationale Veröffentlichungsnummer: WO 2016/001291

(56) Entgegenhaltungen:
- EP-A1- 0 593 925

## Beschreibung

Die vorliegende Erfindung betrifft einen Positionssensorvorrichtung für die Erfassung einer Lageposition eines Aktuators mit einem elektrischen Motor, der von einer Steuereinheit angesteuert wird.

Aktive elektronische Positionssensoren werden für die verschiedensten Zwecke eingesetzt, beispielsweise zur Rückmeldung der Lageposition von Ventilen oder Klappen in Kraftfahrzeugen. Derartige Ventile und Klappen werden von einem elektrischen Motor angetrieben und deren Lageposition wird erfasst. Die zusammengefassten Baugruppen bilden einen Aktuator. Eine über Zuleitungen verbundene Steuereinheit, beispielsweise eine Motorsteuerelektronik (ECU), steuert dabei den elektrischen Motor, der beispielsweise ein Betätigungselement betreibt, dessen Lageveränderung über ein Getriebe von einem Positionssensor erfasst wird. Zum Betreiben dieses Positionssensors wird eine Versorgungsspannung benötigt.

Aktive Positionssensoren für die Lageerfassung bzw. Lageregelung von Aktuatoren werden beim Stand der Technik mit separaten Zuleitungen mit elektrischer Energie (i. d. R. Spannung) versorgt. Es gibt dabei verschiedene Ausgangssignale für die Übertragung der Aktuatorposition. Die bekannte analoge Schnittstelle ist ratiometrisch zur Versorgungsspannung. Daher muss hierbei die Versorgungsspannung, die als Referenz in der Steuereinheit erzeugt wird, auch direkt mit dem Positionssensor verbunden werden. Anders verhält es sich bei versorgungsspannungsunabhängigen (nicht-ratiometrischen) Ausgangssignalen von Positionssensoren. Hier muss nicht zwangsläufig die Versorgungsspannung aus der Steuereinheit zugeführt werden, wenn der Sensor anders mit Energie versorgt werden kann. Nach wie vor besteht jedoch das Problem, dass eine vom Motor separate Versorgungsspannung, beispielsweise von 5 V, für die Positionssensoren über separate Zuleitungen zugeführt werden muss. Dies gilt auch für die neu eingeführte digitale Signalübertragung der Position, wo beispielsweise für eine Punkt-zu-Punkt-Verbindung (kein Bus) ein digitales serielles SENT-Protokoll verwendet wird.

Es versteht sich, dass die Anordnung von derartigen separaten Zuleitungen aufwändig ist.

Aus der US 5 389 864 ist ein Positionssensor mit den Merkmalen des Oberbegriffs von Patentanspruch 1 bekannt. Für diesen bekannten Sensor wird die elektrische Energie für den Betrieb des als Potentiometer ausgebildeten Positionssensors über die Ansteuerleitungen der Motoranschlüsse entnommen.

Ein Aktuatorsystem mit einer entsprechenden Anordnung der Energieversorgung des Positionssensors ist aus der US 6 545 441 B1 bekannt.

Ferner beschreibt die DE 199 46 917 A1 einen Näherungssensor, bei dem die ganze Funktionalität des Sensors in einem einzigen integrierten Bauteil (IC) zusammengefasst ist, wobei dies für eine Verwendung lediglich um eine Energieversorgung ergänzt wird.

Aus der EP 0 593 925 A1 ist eine Vorrichtung zum Erfassen der Bewegung eines bewegbaren Teils bekannt, bei der die von zwei Lagesensoren abgegebenen Lagesignale zu einem Signal addiert werden, das über eine Leitung zu einer Auswerteanordnung geführt ist. Die von den Lagesensoren zugeordneten Lagebereiche weisen ein Überlappungsgebiet auf. Den Lagesignalen werden unterschiedliche diskrete Werte zugewiesen, die in der Auswerteanordnung mit einfachen Mitteln auswertbar sind.

Der Erfindung liegt die Aufgabe zugrunde, eine Positionssensorvorrichtung der eingangs beschriebenen Art zur Verfügung zu stellen, der sich durch einen besonders einfachen Aufbau auszeichnet.

Diese Aufgabe wird erfindungsgemäß mit einer Positionssensorvorrichtung mit den Merkmalen von Patentanspruch 1 gelöst.

Bei der erfindungsgemäßen Lösung entfallen separate Zuleitungen, über die der Positionssensor mit einer separaten Versorgungsspannung beaufschlagt wird. Stattdessen nutzt die Erfindung die ohnehin vorhandenen Ansteuerleitungen bzw. Versorgungsleitungen des Motors von der vorgesehenen Steuereinheit auch für die Versorgung des Positionssensors mit elektrischer Energie. Zusätzliche Leitungen können daher entfallen.

Bei der erfindungsgemäßen Lösung ist eine Gleichrichterschaltung mit der Auswerteschaltung des Positionssensors in eine integrierte Schaltung zusammengeführt. Durch die Integration der Gleichrichterschaltung ergibt sich der Vorteil, dass eine kostengünstige Lösung geschaffen wird und eine wesentlich zuverlässigere und robustere Ausführung im Vergleich zu Leiterplatten gegeben ist. Darüber hinaus ist diese integrierte Lösung im Hinblick auf den Bauraum wesentlich kleiner. Dabei ist die Gleichrichterschaltung in das IC-Gehäuse des Positionssensors mit Auswerteschaltung integriert.

Die Gleichrichterschaltung umfasst eine Brückenschaltung mit Dioden. Die Gleichrichterschaltung umfasst ferner einen Vorwiderstand, einen Speicherkondensator und einen Spannungsregler und ist mit der Auswerteschaltung des Positionssensors in eine integrierte Schaltung zusammengeführt.

Bei einer speziellen Ausführungsform findet eine Halbbrücke Verwendung.

Erfindungsgemäß bleiben die Ausgangssignale innerhalb eines festgelegten Bereiches von der Versorgungsspannung des Positionssensors unabhängig.

Die Erfindung betrifft daher eine Positionssensorvorrichtung, dessen elektrische Energie für seinen Betrieb über die Motoranschlüsse der Ansteuerleitung des Motors von der Steuereinheit entnommen wird. Hinter dem Abgriff der Motoranschlüsse der Ansteuerleitung von der Steuereinheit ist eine Gleichrichterschaltung zur Erzeugung einer gefilterten Gleichspannung angeordnet, die den Positionssensor mit einer ausreichenden Spannung versorgt. Diese Gleichrichterspannung ist mit der Auswerteschaltung des Positionssensors in eine integrierte Schaltung zusammengeführt.

Die Erfindung wird nachfolgend anhand von Ausführungsbeispielen in Verbindung mit der Zeichnung im Einzelnen erläutert. Es zeigen:
Figur 1 ein Blockschaltbild einer erfindungsmäßen Ausführungsform eines Aktuators mit Steuereinheit und Positionssensor;
Figur 2 ein Blockschaltbild einer nicht erfindungsmäßen Ausführungsform eines Aktuators mit Steuereinheit und Positionssensor;
Figur 3 ein Blockschaltbild einer nicht erfindungsmäßen Ausführungsform eines Aktuators mit Steuereinheit und Positionssensor; und
Figur 4 ein Blockschaltbild einer vierten Ausführungsform eines Aktuators mit Steuereinheit und Positionssensor.

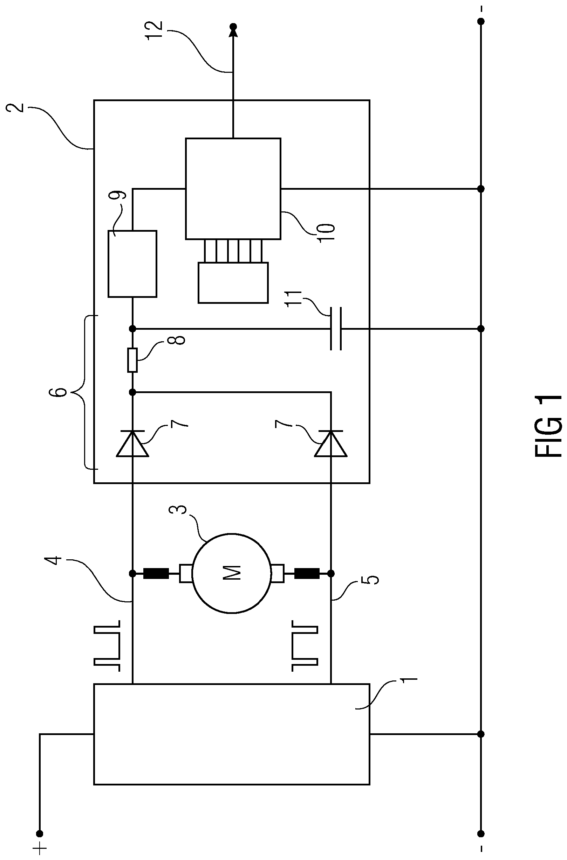

Figur 1 zeigt das Blockschaltbild eines Aktuators, der von einer Steuereinheit (ECU) 1 gesteuert wird, welche mit Spannung versorgt wird. Der Aktuator besitzt einen elektrischen Motor 3, der ein hier nicht gezeigtes Betätigungselement betätigt, dessen Position bzw. Positionsveränderung von einem Positionssensor 10 erfasst wird. Die entsprechende Position bzw. Positionsveränderung wird vom Positionssensor 10 in der Form von elektrischen Signalen über eine Ausgangsleitung 12 der Steuereinheit 1 zugeführt.

Der elektrische Motor 3 wird über die Leitungen 4, 5 der Steuereinheit 1 mit getakteter Spannung beaufschlagt. Die Versorgung des Motors 3 wird ferner dazu benutzt, den Positionssensor 10 mit elektrischer Energie (Gleichspannung) zu betreiben, so dass separate Zuleitungen für den Betrieb des Sensors 10 entfallen können. Im Einzelnen ist dabei hinter dem Abgriff der Motoranschlüsse eine Gleichrichterschaltung 6 mit Vorwiderstand 8, Speicherkondensator 11 und Spannungsregler 9 vorgesehen. Hierdurch wird eine gefilterte Gleichspannung erzeugt, die den elektronischen Positionssensor 10 mit einer ausreichenden Spannung versorgt.

Bei der in Figur 1 dargestellten Ausführungsform weist die Gleichrichterschaltung 6 eine Brückenschaltung in Form einer Halbbrücke mit Dioden 7 auf. Es ist hierbei vorgesehen, dass mindestens ein Anschluss in periodischen Abständen eine positive Spannung liefert und eine gemeinsame Masse für die Brückenschaltung und Signalauswertung vorhanden ist. Dabei sind die Anschlüsse der Ansteuerspannung für den Betrieb des Motors 3 so geschaltet, dass während eines Motorleerlaufs und/oder während einer Motorbremse mindestens einer der beiden Motoranschlüsse mit einer positiven Spannung geschaltet ist.

Die Gleichrichterschaltung 6 mit Vorwiderstand 8, Speicherkondensator und Spannungsregler 9 ist hierbei in dasselbe IC-Gehäuse integriert, in dem sich der Positionssensor 10 mit Auswerteschaltung befindet. Auf diese Weise wird eine kostengünstige Lösung geschaffen, die zu einer besonders zuverlässigen und robusten Ausführung führt. Darüber hinaus benötigt diese Lösung mit integrierter Gleichrichterschaltung einen besonders geringen Bauraum.

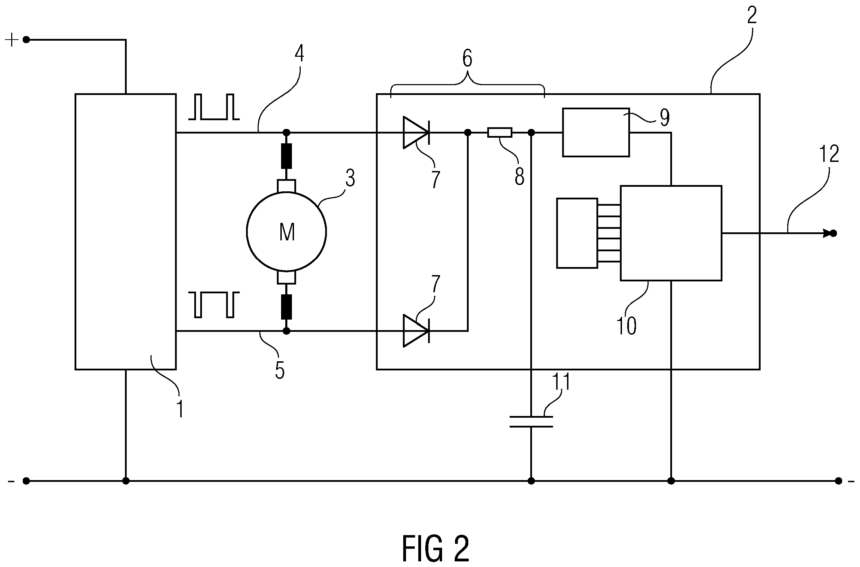

Die Ausführungsform der Figur 2 unterscheidet sich von der der Figur 1 im Wesentlichen nur dadurch, dass hierbei der Speicherkondensator 11 nicht in das IC-Gehäuse 2 integriert, sondern extern geschaltet ist. Diese Lösung kommt zur Ausführung, wenn der Kondensator aus Bauraumgründen nicht integriert werden kann.

Bei beiden Ausführungsformen der Figuren 1 und 2 ist die Gleichrichterschaltung 6 als Halbbrückengleichrichter ausgebildet, wobei eine separate Masseleitung zur Sensorversorgung zugeführt wird.

Anstatt der zwei Dioden 7 in den Ausführungsformen der Figuren 1 und 2 können zwei Spannungsregler verwendet werden, welche die gleiche Aufgabe lösen.

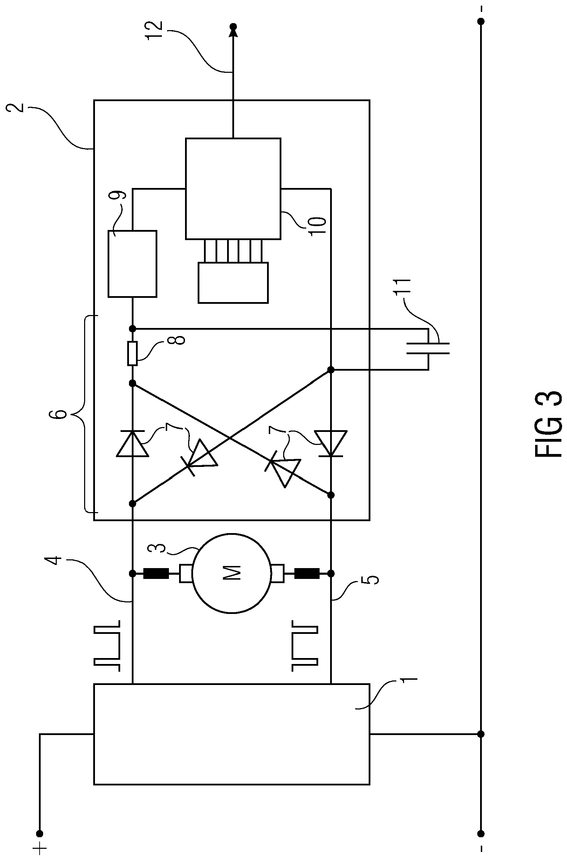

Die in Figur 3 dargestellte Ausführungsform zeigt eine Lösung, bei der die Gleichrichterschaltung 6 als Vollbrückengleichrichter ausgebildet ist, der es ermöglicht, den Sensor 10 ohne separate Masseleitung zu versorgen. Der Speicherkondensator 11 ist hierbei extern angeschlossen.

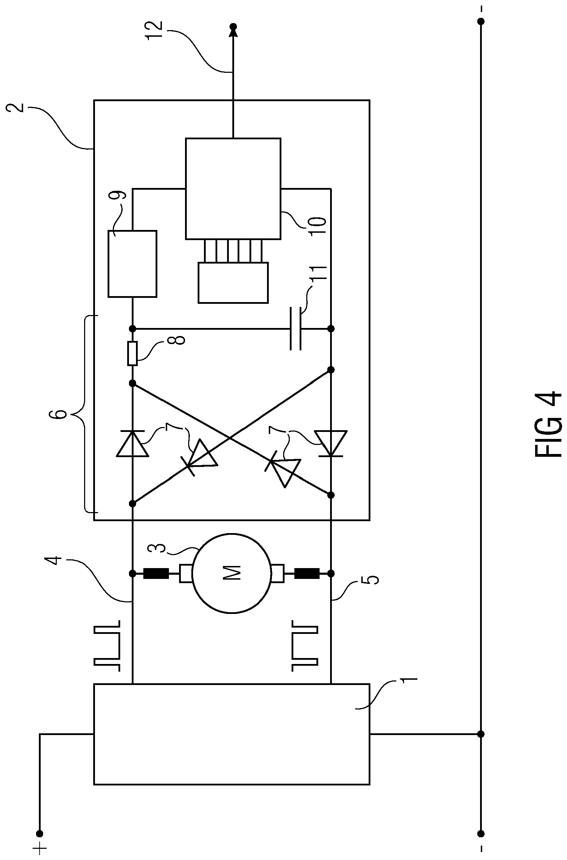

Figur 4 zeigt eine Ausführungsform analog zu der der Figur 3, jedoch mit integriertem Speicherkondensator 11.

Sämtliche Ausführungsformen betreffen einen Positionssensor 10 mit Spannungsversorgung über die Motoranschlüsse und Integration der Gleichrichterschaltung in das IC-Gehäuse des Sensors (Integration im ASIC).

## Patentansprüche

1. Positionssensorvorrichtung für die Erfassung einer Lageposition eines Aktuators mit einem elektrischen Motor (3), der von einer Steuereinheit (1) angesteuert wird, aufweisend:
- ein IC-Gehäuse (2),
- einen Positionssensor (10),
- Ansteuerleitungen (4, 5) mit Motoranschlüssen, wobei die Ansteuerleitungen (4, 5) dazu ausgebildet sind, einen elektrischen Motor (3) mit einer durch eine Steuereinheit (1) beaufschlagten Spannung über die Motoranschlüsse zu versorgen, wobei mindestens einer der Motoranschlüsse des elektrischen Motors (3) dazu ausgebildet ist, an den Positionssensor (10) eine getaktete positive Spannung zu liefern, wobei der Positionssensor (10) dazu ausgebildet ist, die elektrische Energie für seinen Betrieb über die Ansteuerleitungen (4, 5) der Motoranschlüsse zu entnehmen, und
- eine Gleichrichterschaltung (6) zur Gleichrichtung und Filterung der getakteten Spannung der Motoranschlüsse (4, 5), wobei die Gleichrichterschaltung (6) umfasst:
- eine Brückenschaltung mit Dioden (7),
- einen Vorwiderstand
- einen Speicherkondensator (11), und
- einen Spannungsregler (9),
wobei die Gleichrichterschaltung (6) mit einer Auswerteschaltung des Positionssensors (10) in eine integrierte Schaltung zusammengeführt ist, die in das IC-Gehäuse (2) des Positionssensors (10) integriert ist,
wobei die Ausgangssignale des Positionssensors (10) innerhalb eines festgelegten Bereiches von der Versorgungsspannung des Positionssensors (10) unabhängig bleiben.

2. Positionssensorvorrichtung nach dem Anspruch 1, wobei die Gleichrichterschaltung (6) eine Halbbrücke umfasst.

## Claims

1. Position sensor device for sensing a position of an actuator having an electric motor (3) which is controlled by a control unit (1), having:
- an IC housing (2),
- a position sensor (10),
- control lines (4, 5) with motor connections, wherein the control lines (4, 5) are designed to supply an electric motor (3) with a voltage which is applied by a control unit (1) via the motor connections, wherein at least one of the motor connections of the electric motor (3) is designed to provide the position sensor (10) with a clocked positive voltage, wherein the position sensor (10) is designed to take the electrical energy for its operation via the control lines (4, 5) of the motor connections, and
- a rectifier circuit (6) for rectifying and filtering the clocked voltage of the motor connections (4, 5), wherein the rectifier circuit (6) comprises:
- a bridge circuit with diodes (7),
- a series resistor,
- a storage capacitor (11), and
- a voltage controller (9),
wherein the rectifier circuit (6) is combined with an evaluation circuit of the position sensor (10) in an integrated circuit which is integrated in the IC housing (2) of the position sensor (10),
wherein the output signals from the position sensor (10) remain independent of the supply voltage of the position sensor (10) within a stipulated range.

2. Position sensor device according to Claim 1, wherein the rectifier circuit (6) comprises a half-bridge.

## Revendications

1. Dispositif capteur de position pour la détection d'une position d'un actionneur comprenant un moteur électrique (3), lequel est commandé par une unité de commande (1), possédant :
- un boîtier de CI (2),
- un capteur de position (10),
- des lignes de commande (4, 5) ayant des bornes de moteur,
les lignes de commande (4, 5) étant configurées pour alimenter un moteur électrique (3) avec une tension appliquée par l'unité de commande (1) par le biais des bornes de moteur, au moins l'une des bornes de moteur du moteur électrique (3) étant configurée pour délivrer au capteur de position (10) une tension positive cadencée, le capteur de position (10) étant configuré pour prélever l'énergie électrique pour son fonctionnement par le biais des lignes de commande (4, 5) des bornes de moteur, et
- un circuit redresseur (6) destiné à redresser et à filtrer la tension cadencée des bornes de moteur (4, 5), le circuit redresseur (6) comportant :
- un circuit en pont avec des diodes (7),
- une résistance série,
- un condensateur d'accumulation (11), et
- un régulateur de tension (9),
le circuit redresseur (6) étant fusionné avec un circuit d'interprétation du capteur de position (10) en un circuit intégré, lequel est intégré dans le boîtier de CI (2) du capteur de position (10),
les signaux de sortie du capteur de position (10) restant indépendants de la tension d'alimentation du capteur de position (10) à l'intérieur d'une plage définie.

2. Dispositif capteur de position selon la revendication 1, le circuit redresseur (6) comprenant un demi-pont.
